# EUROPÄISCHE PATENTSCHRIFT

(11) **EP 3 286 435 B1**
(45) Veröffentlichungstag und Bekanntmachung des Hinweises auf die Patenterteilung: **09.09.2020**
(21) Anmeldenummer: 16715453.3
(22) Anmeldetag: 06.04.2016
(51) Int. Cl.: F04D 25/02, F04D 29/056, F04D 29/62, F02C 6/12

(54) **ABGASTURBOLADER FÜR EINE VERBRENNUNGSKRAFTMASCHINE, INSBESONDERE EINES KRAFTWAGENS**
EXHAUST TURBOCHARGER FOR AN INTERNAL COMBUSTION ENGINE, IN PARTICULAR OF A MOTOR VEHICLE
TURBOCOMPRESSEUR À GAZ D'ÉCHAPPEMENT POUR UN MOTEUR À COMBUSTION INTERNE, NOTAMMENT D'UNE AUTOMOBILE

(30) Priorität: 21.04.2015 DE 102015005034
(43) Veröffentlichungstag der Anmeldung: 28.02.2018
(73) Patentinhaber: Daimler AG, 70372 Stuttgart (DE)
(72) Erfinder: GALAN VENTOSA, Alfonso, 70376 Fellbach (DE); RUEDLE, Harald, 70499 Stuttgart (DE); MUELLER, Markus, 71332 Waiblingen (DE); CHEBLI, Elias, 71134 Aidlingen (DE)
(74) Vertreter: JENSEN & SON
(86) Internationale Anmeldenummer: PCT/EP2016/000564
(87) Internationale Veröffentlichungsnummer: WO 2016/169636

(56) Entgegenhaltungen:
- DE-A1-102011 075 517
- US-A1- 2011 103 948

## Beschreibung

Die Erfindung betrifft einen Abgasturbolader für eine Verbrennungskraftmaschine, insbesondere eines Kraftwagens wie beispielsweise eines Personenkraftwagens, gemäß dem Oberbegriff von Patentanspruch 1.

Ein solcher Abgasturbolader für eine Verbrennungskraftmaschine, insbesondere eines Kraftwagens, ist beispielsweise bereits der DE 10 2011 075 517 A1 als bekannt zu entnehmen. Der Abgasturbolader umfasst dabei ein Lagergehäuse zum Lagern eines Rotors. Ein solcher Rotor weist üblicherweise eine Welle und wenigstens ein Laufrad wie beispielsweise ein Turbinenrad und/oder ein Verdichterrad auf, wobei die Welle drehfest mit dem Laufrad verbunden ist. Im fertig hergestellten Zustand des Abgasturboladers ist der Rotor üblicherweise über die Welle an dem Lagergehäuse gelagert und dabei um eine Drehachse relativ zu dem Lagergehäuse drehbar.

Das Turbinenrad ist dabei von Abgas der Verbrennungskraftmaschine antreibbar. Da das Turbinenrad und das Verdichterrad drehfest mit der Welle verbunden sind, kann das Verdichterrad über die Welle von dem Turbinenrad angetrieben werden. Das Verdichterrad dient zum Verdichten von Luft, sodass im Abgas enthaltene Energie zum Verdichten der Luft genutzt werden kann. Dabei weist das Lagergehäuse wenigstens eine Durchgangsöffnung für den Rotor auf. Mit anderen Worten durchdringt der Rotor im fertig hergestellten Zustand des Abgasturboladers die Durchgangsöffnung des Lagergehäuses.

Der Abgasturbolader umfasst ferner wenigstens einen mit dem Lagergehäuse verbundenen Gehäusedeckel, mittels welchem die Durchgangsöffnung in axialer Richtung des Abgasturboladers zumindest teilweise überdeckt und somit verschlossen ist. Die axiale Richtung des Abgasturboladers fällt dabei mit der axialen Richtung des Rotors zusammen und verläuft in Richtung der Drehachse des Rotors.

Es hat sich gezeigt, dass die Montage des Gehäusedeckels aufwendig ist, da die Gefahr besteht, dass der Gehäusedeckel verkantet und/oder mit einer nur unsymmetrischen Kraft, insbesondere Verpressungskraft, am Lagergehäuse montiert wird. Eine präzise Montage des Gehäusedeckels ohne Verkanten ist jedoch wichtig, um übermäßige Leckagen, beispielsweise von Schmieröl, sowie übermäßiges Blow-by des Abgasturboladers zu vermeiden.

Aufgabe der vorliegenden Erfindung ist es daher, einen Abgasturbolader der eingangs genannten Art derart weiterzuentwickeln, dass der Gehäusedeckel auf besonders einfache Weise montierbar ist, wobei übermäßige Leckagen und übermäßiges Blow-by vermieden werden können.

Diese Aufgabe wird durch einen Abgasturbolader mit den Merkmalen des Patentanspruchs 1 gelöst. Vorteilhafte Ausgestaltungen mit zweckmäßigen Weiterbildungen der Erfindung sind in den übrigen Ansprüchen angegeben.

Bei dem erfindungsgemäßen Abgasturbolader kann im Gegensatz dazu die Montage des Gehäusedeckels auf besonders einfache und somit zeit- und kostengünstige Weise erfolgen, da der Gehäusedeckel selbst beziehungsweise das Gewindeelement auf besonders einfache, zeit- und kostengünstige Weise am Lagergehäuse befestigt werden kann. Ferner kann die Gefahr, dass das Gewindeelement und der Gehäusedeckel verkanten und somit fehlerhaft montiert werden, besonders gering gehalten werden, sodass auch zeit- und kostenintensive Überwachungsmaßnahmen zum Überwachen der Montage vermieden werden können. Durch die Befestigung des Gehäusedeckels mittels des genau einen Gewindeelements kann der Gehäusedeckel darüber hinaus besonders präzise montiert werden. Darunter ist zu verstehen, dass mittels des Gewindeelements eine Kraft, insbesondere eine Anpressungskraft, bewirkt werden kann, mittels welcher der Gehäusedeckel am Lagergehäuse befestigbar beziehungsweise befestigt ist, wobei diese Anpressungskraft zumindest im Wesentlichen symmetrisch wirkt. Dadurch können übermäßige Leckagen sowie übermäßiges Blow-by vermieden werden.

Unter dem genannten Blow-by ist eine unerwünschte Gasströmung insbesondere zwischen dem Lagergehäuse und dem Gehäusedeckel hindurch zu verstehen, wobei es zu einer solchen unerwünschten Gasströmung, welche eine Leckageströmung ist, insbesondere dann kommen kann, wenn der Gehäusedeckel unsymmetrisch montiert wird und dabei verkantet. Die Gefahr einer solchen unsymmetrischen Montage und eines Verkantens des Gehäusedeckels kann bei dem erfindungsgemäßen Abgasturbolader besonders gering gehalten werden, sodass auch die Gefahr von Leckagen und Blow-by gering gehalten werden kann.

Bei dem erfindungsgemäßen Abgasturbolader kann der Gehäusedeckel auf Seiten eines Verdichterrads des Rotors und somit verdichterseitig angeordnet sein. Somit kann vermieden werden, dass durch Leckagen und Blow-by eine übermäßige Menge von Öl beziehungsweise Schmieröl zum Schmieren des Rotors in einen Verdichter des Abgasturboladers und somit in mittels des Verdichters zu verdichtenden Luft gelangt. Ferner ist es möglich, dass der Gehäusedeckel auf Seiten eines Turbinenrads des Rotors und somit turbinenseitig angeordnet ist. Hierdurch kann vermieden werden, dass eine übermäßige Menge an Schmieröl in eine von Abgas der Verbrennungskraftmaschine antreibbare Turbine des Abgasturboladers gelangen kann.

Erfindungsgemäß sind das Gewindeelement und der Gehäusedeckel als separat voneinander ausgebildete Bauteile ausgebildet sind. Darunter ist zu verstehen, dass das Gewindeelement und der Gehäusedeckel nicht etwa einstückig miteinander ausgebildet, sondern jeweilige, an sich separate Einzelbauteile sind. Dabei ist das Gewindeelement unter Halten des Gehäusedeckels am Lagergehäuse in axialer Richtung zumindest mittelbar am Gehäusedeckel abgestützt. Hierbei ist das Gewindeelement beispielsweise durch Verschrauben des Gewindeelements mit dem Lagergehäuse über das Außengewinde und das Innengewinde in axialer Richtung unter Vermittlung des Gehäusedeckels gegen das Lagergehäuse gespannt, wobei der Gehäusedeckel in axialer Richtung zwischen dem Lagergehäuse und dem Gewindeelement angeordnet ist. Der Gehäusedeckel ist dabei beispielsweise in axialer Richtung einerseits zumindest mittelbar am Lagergehäuse abgestützt und in axialer Richtung andererseits zumindest mittelbar am Gewindeelement abgestützt, sodass der Gehäusedeckel mittels des Gewindeelements in axialer Richtung gegen das Lagergehäuse gepresst beziehungsweise gedrückt ist. Hierdurch lässt sich mittels des Gewindeelements eine besonders gleichmäßige beziehungsweise symmetrische, auf den Gehäusedeckel wirkende Anpresskraft erzielen, mittels welcher der Gehäusedeckel gleichmäßig gegen das Lagergehäuse gespannt ist. Dadurch kann die Gefahr von unerwünschten Leckagen und unerwünschtem Blow-by besonders gering gehalten werden. Gleichzeitig kann eine besonders einfache Montage des Gehäusedeckels und des Gewindeelements realisiert werden.

Eine weitere Ausführungsform zeichnet sich dadurch aus, dass der Gehäusedeckel zumindest teilweise in dem Gewindeelement aufgenommen ist. Hierunter ist insbesondere zu verstehen, dass der Gehäusedeckel in radialer Richtung des Abgasturboladers nach außen zumindest teilweise durch das Gewindeelement überdeckt ist. Zum einen kann hierdurch der Bauraumbedarf des Abgasturboladers, insbesondere in axialer Richtung, besonders gering gehalten werden. Zum anderen kann eine besonders gute Dichtheit realisiert werden, sodass die Gefahr von unerwünschten Leckagen und unerwünschtem Blow-by besonders gering gehalten werden kann.

Bei einer besonders vorteilhaften Ausführungsform der Erfindung weist das Gewindeelement einen größeren Außendurchmesser als der Gehäusedeckel auf, wodurch die Gefahr eines Verkantens besonders gering gehalten werden kann. Das Gewindeelement ist somit nicht als Schraube ausgebildet, welche durch eine korrespondierende und beispielsweise als Durchgangsöffnung ausgebildete Schrauböffnung des Gehäusedeckels hindurchgesteckt wird, sondern das Gewindeelement ist beispielsweise als, insbesondere zumindest im Wesentlichen ringförmiger, Gewindedeckel ausgebildet, mittels welchem der Gehäusedeckel unter Halten des Gehäusedeckels am Lagergehäuse auf einem besonders großen Durchmesser sowie insbesondere in Umfangsrichtung des Gehäusedeckels vollständig umlaufend mit einer Kraft, insbesondere Anpressungskraft, beaufschlagt werden kann, beziehungsweise mittels welcher der Gehäusedeckel am Lagergehäuse gehalten wird. Durch diese vorteilhafte Kraftbeaufschlagung kann ein Verkanten des Gehäusedeckels bei dessen Montage vermieden werden.

Um die Gefahr von Leckagen und Blow-by besonders gering zu halten, ist wenigstens ein an dem Lagergehäuse um eine Drehachse relativ zu dem Lagergehäuse drehbar gelagertes Laufrad des Rotors vorgesehen. Bei diesem Laufrad kann es sich um das zuvor genannte Turbinenrad oder Verdichterrad handeln. Das Laufrad weist dabei einen dem Lagergehäuse zugewandten Radrücken mit zumindest einem ebenen Radrückenbereich auf. Unter dem ebenen Radrückenbereich ist zu verstehen, dass der Radrückenbereich beispielsweise zumindest im Wesentlichen senkrecht zur axialen Richtung beziehungsweise zur Drehachse verläuft beziehungsweise in einer Ebene angeordnet ist, welche sich zumindest im Wesentlichen senkrecht zur axialen Richtung und somit zur Drehachse erstreckt. Der Radrückenbereich ist dabei in zumindest teilweiser Überdeckung mit einem von dem ebenen Radrückenbereich in axialer Richtung weg gewölbten Bereich des Gehäusedeckels und/oder des Gewindeelements angeordnet. Dies bedeutet, dass der von dem ebenen Radrückenbereich in axialer Richtung weg gewölbte Bereich des Gehäusedeckels in axialer Richtung nach außen durch den ebenen Radrückenbereich des Radrückens des Laufrads überdeckt ist. Durch diese Kombination des zumindest im Wesentlichen ebenen Radrückenbereichs und des bezogen auf den Radrückenbereich konkaven Bereichs des Gehäusedeckels ist ein vorteilhafter Abstand zwischen dem Radrücken beziehungsweise einer Radrückengeometrie und dem Gehäusedeckel beziehungsweise dem Gewindedeckel geschaffen, wodurch Leckagen, insbesondere Ölleckagen, sowie Blow-by besonders gering gehalten werden können.

Um eine besonders vorteilhafte Dichtheit des Abgasturboladers zu schaffen, ist es bei einer weiteren Ausführungsform der Erfindung vorgesehen, dass der Gehäusedeckel wenigstens eine Aufnahme für ein Dichtungselement zum Abdichten des Gehäusedeckels gegen das Lagergehäuse aufweist. Bei dem Dichtungselement handelt es sich beispielsweise um einen Ring, insbesondere einen O-Ring, wobei das Dichtungselement vorzugsweise aus Gummi gebildet ist. Die Aufnahme ist dabei beispielsweise eine Nut, in welcher das Dichtungselement zumindest teilweise aufgenommen ist. Das Dichtungselement ist somit besonders sicher am Gehäusedeckel gehalten, sodass der Gehäusedeckel mittels des Dichtungselements besonders gut gegen das Lagergehäuse abgedichtet werden kann.

Um hierbei eine besonders einfache Montage sowie eine besonders vorteilhafte Dichtheit des Abgasturboladers zu realisieren, ist es bei einer weiteren Ausführungsform der Erfindung vorgesehen, dass das Außengewinde des Gewindeelements auf einem größeren Außendurchmesser als die Aufnahme angeordnet ist. Mit anderen Worten ist das Außengewinde in radialer Richtung des Abgasturboladers weiter außen angeordnet als die Aufnahme.

Schließlich hat es sich als besonders vorteilhaft gezeigt, wenn wenigstens ein Axiallager zum axialen Lagern des Rotors vorgesehen ist, wobei das Axiallager mittels des Gewindeelements am Lagergehäuse gehalten ist. Hierdurch kann eine besonders einfache Montage des Abgasturboladers realisiert werden, da das Gewindeelement nicht nur zum Halten des Gehäusedeckels am Lagergehäuse, sondern auch zum Halten, insbesondere Festlegen, des Axiallagers genutzt wird.

Zur Erfindung gehört auch eine Verbrennungskraftmaschine, insbesondere für einen Kraftwagen, mit wenigstens einem erfindungsgemäßen Abgasturbolader. Vorteilhafte Ausgestaltungen des erfindungsgemäßen Abgasturboladers sind dabei als vorteilhafte Ausgestaltungen der erfindungsgemäßen Verbrennungskraftmaschine anzusehen

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, der nur durch die Ansprüche definiert wird.

Die Zeichnung zeigt in:
- Fig. 1: ausschnittsweise eine schematische Längsschnittansicht eines Abgasturboladers, der kein Teil der Erfindung ist, für eine Verbrennungskraftmaschine, wobei ein Gehäusedeckel mit einem Lagergehäuse mittels genau eines Gewindeelements verbunden ist, welches einstückig mit dem Gehäusedeckel ausgebildet ist;
- Fig. 2: ausschnittsweise eine schematische Vorderansicht des Abgasturboladers gemäß Figur 1.
- Fig. 3: ausschnittsweise eine schematische Längsschnittansicht des Abgasturboladers gemäß einer Ausführungsform der Erfindung, bei welcher der Gehäusedeckel und das Gewindeelement als separat voneinander ausgebildete Einzelbauteile ausgebildet sind; und
- Fig. 4: ausschnittsweise eine schematische Vorderansicht des Abgasturboladers gemäß dieser Ausführungsform.

In den Fig. sind gleiche oder funktionsgleiche Elemente mit gleichen Bezugszeichen versehen.

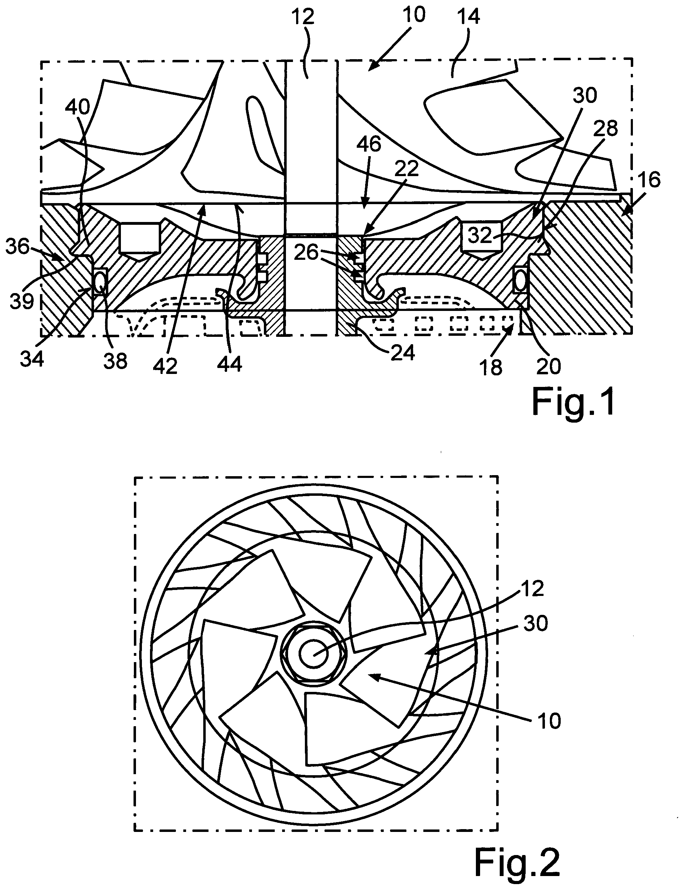

Fig. 1 zeigt in einer schematischen Längsschnittansicht ausschnittsweise einen Abgasturbolader, der kein Teil der Erfindung ist, für eine Verbrennungskraftmaschine, insbesondere eines Kraftwagens wie beispielsweise eines Personenkraftwagens. Die Verbrennungskraftmaschine ist beispielsweise als Hubkolben-Verbrennungsmaschine ausgebildet und dient zum Antreiben des Kraftwagens. Die Verbrennungskraftmaschine weist wenigstens einen Ansaugtrakt auf, welcher von Luft durchströmbar ist. Während ihres Betriebs saugt die Verbrennungskraftmaschine Luft aus der Umgebung über den Ansaugtrakt an, mittels welchem die Luft zu und in wenigstens einen Brennraum insbesondere in Form eines Zylinders der Verbrennungskraftmaschine geführt wird. Dem Zylinder wird die Luft sowie Kraftstoff, insbesondere flüssiger Kraftstoff, zugeführt, woraus ein Kraftstoff-Luft-Gemisch in dem Zylinder (Brennraum) resultiert. Das Kraftstoff-Luft-Gemisch wird gezündet und verbrennt dadurch unter Bildung von Abgas. Die Verbrennungskraftmaschine umfasst dabei ferner einen von dem Abgas durchströmbaren Abgastrakt, mittels welchem das Abgas aus dem Zylinder abgeführt wird.
Der Abgasturbolader umfasst dabei eine in Fig. 1 nicht erkennbare Turbine, welche ein Turbinengehäuse und ein erstes Laufrad in Form eines Turbinenrads umfasst. Die Turbine, das heißt das Turbinengehäuse und das Turbinenrad, ist in dem Abgastrakt angeordnet, sodass die Turbine beziehungsweise das Turbinenrad von dem Abgas antreibbar ist.

Das Turbinenrad beziehungsweise das erste Laufrad ist Bestandteil eines im Ganzen mit 10 bezeichneten Rotors des Abgasturboladers. Der Rotor 10 umfasst dabei eine Welle 12, mit welcher das Turbinenrad drehfest verbunden ist. Ferner umfasst der Rotor 10 ein zweites Laufrad in Form eines Verdichterrads 14 eines Verdichters des Abgasturboladers. Der Verdichter umfasst ferner ein in Fig. 1 nicht dargestelltes Verdichtergehäuse, in welchem das Verdichterrad 14 (zweites Laufrad) angeordnet ist. Das Verdichterrad 14 ist ebenfalls drehfest mit der Welle 12 verbunden, sodass das Verdichterrad 14 über die Welle 12 von dem Turbinenrad angetrieben werden kann. Der Verdichter, das heißt das Verdichtergehäuse und das Verdichterrad 14, ist in dem Ansaugtrakt angeordnet, sodass die den Ansaugtrakt durchströmende Luft mittels des Verdichters, insbesondere mittels des Verdichterrads 14, verdichtet werden kann. Hierzu wird das Verdichterrad 14 vom Turbinenrad angetrieben, sodass im Abgas enthaltene Energie zum Verdichten der Luft genutzt werden kann. Das Turbinenrad und das Verdichterrad 14 und somit der Rotor 10 insgesamt sind um eine Drehachse relativ zu dem Turbinengehäuse und dem Verdichtergehäuse drehbar.

Der Abgasturbolader umfasst darüber hinaus ein Lagergehäuse 16, mit welchem das Verdichtergehäuse und das Turbinengehäuse verbunden sind. Dabei ist der Rotor 10 an dem Lagergehäuse 16 um die Drehachse relativ zu dem Lagergehäuse 16 drehbar gelagert. Der Rotor 10 ist dabei beispielsweise über eine Lagereinrichtung drehbar an dem Lagergehäuse 16 gelagert, wobei der Rotor 10 mittels der Lagereinrichtung in radialer Richtung und in axialer Richtung an dem Lagergehäuse 16 gelagert ist.

Aus Fig. 1 ist erkennbar, dass das Lagergehäuse 16 auf Seiten des Verdichters beziehungsweise des Verdichterrads 14 und somit verdichterseitig eine Durchgangsöffnung 18 für den Rotor 10 aufweist. Dies bedeutet, dass - wie aus Fig. 1 erkennbar ist - der Rotor 10 und insbesondere die Welle 12 die Durchgangsöffnung 18 durchdringen.

Der Abgasturbolader umfasst darüber hinaus einen verdichterseitigen, mit dem Lagergehäuse 16 verbundenen Gehäusedeckel 20, mittels welchem die Durchgangsöffnung 18 in axialer Richtung des Abgasturboladers zumindest teilweise und vorliegend zumindest überwiegend verschlossen ist. Die axiale Richtung des Abgasturboladers fällt dabei mit der axialen Richtung des Rotors 10 zusammen, wobei die axiale Richtung parallel zur Drehachse verläuft.

Die vorigen und folgenden Ausführungen zur verdichterseitigen Durchgangsöffnung 18 und zum verdichterseitigen Gehäusedeckel 20 können ohne weiteres auch auf die Seite der Turbine übertragen werden, sodass der Abgasturbolader beispielsweise alternativ oder zusätzlich eine auf Seiten der Turbine und somit turbinenseitig angeordnete Durchgangsöffnung und einen damit korrespondierenden, turbinenseitigen Gehäusedeckel aufweist.

Der Gehäusedeckel 20 selbst weist ebenfalls eine Durchgangsöffnung 22 auf, in welcher eine Dichtungsbuchse 24 zumindest teilweise aufgenommen ist. Die Dichtungsbuchse 24 durchdringt die Durchgangsöffnung 22 zumindest teilweise und vorliegend vollständig, wobei die Dichtungsbuchse 24 beispielsweise drehfest mit der Welle 12 verbunden und dabei auf der Welle 12 angeordnet ist. Die Dichtungsbuchse 24 weist außenumfangsseitig Aufnahmen in Form von Nuten 26 auf, in welchen jeweilige Dichtungselemente insbesondere in Form Radialwellendichtringen aufnehmbar sind. Die in den Nuten 26 aufnehmbaren Dichtungselemente sind vorzugsweise jeweils aus Gummi gebildet, sodass die Dichtungsbuchse 24 besonders vorteilhaft mittels der Dichtungselemente gegen den Gehäusedeckel 20 abgedichtet werden kann. Dadurch kann insbesondere ein in radialer Richtung zwischen der Dichtungsbuchse 24 und dem Gehäusedeckel 20 ausgebildeter Spalt mittels der Dichtungselemente abgedichtet werden. Dadurch kann vermieden werden, dass übermäßige Mengen von Öl beziehungsweise Schmieröl sowie übermäßige Mengen von Blow-by in den Verdichter und somit in die mittels des Verdichters zu verdichtende Luft gelangen können. Das genannte Schmieröl dient insbesondere zum Schmieren des Rotors 10 beziehungsweise jeweiliger Lagerstellen, an denen der Rotor 10 drehbar am Lagergehäuse 16 gelagert ist.

Unter dem genannten Blow-by ist ein Gas beziehungsweise eine Gasströmung zu verstehen, welches beziehungsweise welche Schmieröl enthalten kann. Das Blow-by ist ein unerwünschter Leckagestrom, der - wenn er nicht verhindert wird - zwischen der Dichtungsbuchse 24 und dem Gehäusedeckel 20 und/oder zwischen dem Gehäusedeckel 20 und dem Lagergehäuse 16 hindurch und somit in den Verdichter unerwünschterweise strömen kann.

Es ist bei dem Abgasturbolader vorgesehen, dass der Gehäusedeckel 20 mit dem Lagergehäuse 16 mittels genau eines ein Außengewinde 28 aufweisenden Gewindeelements 30 verbunden ist, welches über sein Außengewinde 28 und ein korrespondierendes Innengewinde 32 des Lagergehäuses 16 mit dem Lagergehäuse 16 verschraubt ist. Mit anderen Worten ist der Gehäusedeckel 20 nicht etwa mittels einer Mehrzahl von Schrauben oder mittels eines Sicherungsrings, sondern mittels des genau einen Gewindeelements 30 am Lagergehäuse 16 gehalten.

Es ist dabei vorgesehen, dass das Gewindeelement 30 einstückig mit dem Gehäusedeckel 20 ausgebildet ist. Dies bedeutet, dass das Gewindeelement 30 durch den Gehäusedeckel 20 gebildet ist beziehungsweise dass das Außengewinde 28 in den Gehäusedeckel 20 integriert ist und somit der Gehäusedeckel 20 selbst das Außengewinde 28 aufweist, welches unter Verschrauben des Gewindeelements 30 beziehungsweise des Gehäusedeckels 20 mit dem Lagergehäuse 16 in das korrespondierende Innengewinde 32 eingeschraubt ist.

Aus Fig. 1 ist erkennbar, dass der Gehäusedeckel 20 und das Gewindeelement 30 in axialer Richtung zumindest teilweise, insbesondere zumindest überwiegend und vorliegend vollständig, in der korrespondierenden Durchgangsöffnung 18 aufgenommen sind. Wird das Außengewinde 28 in das korrespondierende Innengewinde 32 eingeschraubt, wobei das Gewindeelement 30 und mit diesem der Gehäusedeckel 20 um die Drehachse relativ zu dem Lagergehäuse 16 gedreht werden, so wird diese Drehung des Gewindeelements 30 und des Gehäusedeckels 20 durch das Außengewinde 28 und das Innengewinde 32 in eine translatorische Bewegung des Gewindeelements 30 und des Gehäusedeckels 20 entlang der Drehachse umgewandelt. Hierdurch werden das Gewindeelement 30 und insbesondere der Gehäusedeckel 20 gleichmäßig und symmetrisch in Richtung des Lagergehäuses 16 bewegt, sodass der Gehäusedeckel 20 in axialer Richtung besonders gleichmäßig und symmetrisch gegen das Lagergehäuse 16 abgestützt und gespannt werden kann. Mit anderen Worten ist es möglich, eine zumindest im Wesentlichen symmetrische und gleichmäßig auf den Gehäusedeckel 20 wirkende Anpressungskraft zu realisieren, mittels welcher der Gehäusedeckel 20 insbesondere in axialer Richtung gegen das Lagergehäuse 16 gehalten wird. Ein Verkanten des Gehäusedeckels 20 sowie eine unsymmetrische Anpressungskraft können vermieden werden, sodass die Gefahr von Leckagen, insbesondere Schmierölleckagen, und Blow-by besonders gering gehalten werden kann. Ferner kann eine besonders einfache Montage realisiert werden, da das Gewindeelement 30 zusammen mit dem Gehäusedeckel 20 montiert wird. Im Gegensatz zur Verwendung von mehreren Schrauben zum Befestigen des Gehäusedeckels 20 am Lagergehäuse 16, wobei diese Schrauben - um die Gefahr eines Verkantens zu vermeiden - gleichzeitig festgezogen werden müssten, kann die Gefahr eines Verkantens des Gehäusedeckels 20 besonders gering gehalten werden bei gleichzeitiger Realisierung einer einfachen Montage, da lediglich das genau eine Gewindeelement 30 verschraubt beziehungsweise festgezogen werden muss.

Aus Fig. 1 ist ferner erkennbar, dass der Gehäusedeckel 20, insbesondere seine außenumfangsseitige Mantelfläche 34, wenigstens eine Aufnahme vorliegend in Form einer Nut 36 aufweist, in welcher ein Dichtungselement vorliegend in Form eines O-Rings 38 zumindest teilweise aufgenommen ist. Mittels des O-Rings 38 ist der Gehäusedeckel 20 gegen das Lagergehäuse 16 abgedichtet, sodass die Gefahr von Leckagen und Blow-by besonders gering gehalten werden kann. Mit anderen Worten ist es vorgesehen, das Außengewinde 28 und die Nut 36 und somit den O-Ring 38 in den Gehäusedeckel 20 zu integrieren, sodass nicht nur eine besonders einfache und zeit- und kostengünstige Montage realisierbar ist, sondern auch die Teileanzahl und somit das Gewicht des Abgasturboladers besonders gering gehalten werden können. Ferner ist aus Fig. 1 besonders gut erkennbar, dass das Außengewinde 28 auf einem größeren Außendurchmesser als die Nut 36 angeordnet ist. Mit anderen Worten ist das Außengewinde 28 in radialer Richtung weiter außen als die Nut 36 angeordnet.

Dabei ist die Durchgangsöffnung 18 als Stufenöffnung ausgebildet und weist einen Bund 39 auf, welcher als ein erster Anschlag fungieren kann. Das Gewindeelement 30 und der Gehäusedeckel 20 sind außenumfangsseitig als Stufenring ausgebildet und weisen ebenfalls einen Bund 40 auf, welcher als ein zweiter Anschlag fungiert. Das Gewindeelement 30 und der Gehäusedeckel 20 werden dabei so lange mit dem Lagergehäuse 16 verschraubt, bis der Bund 40 in axialer Richtung in Stützanlage mit dem Bund 39 kommt. Durch diese Stützanlage können das Gewindeelement 30 und somit der Gehäusedeckel 20 mittels des Außengewindes 28 und des Innengewindes 32 gegen das Lagergehäuse 16 verspannt und somit an diesem befestigt beziehungsweise mit diesem verbunden werden. Ferner ist dadurch eine besonders vorteilhafte Abdichtung realisierbar, da sich der Gehäusedeckel 20 über seine außenumfangsseitige Mantelfläche 34 in radialer Richtung nach außen an dem Lagergehäuse 16 abstützen kann.

Aus Fig. 1 ist ferner erkennbar, dass das Verdichterrad 14 einen dem Lagergehäuse 16 und dem Gewindeelement 30 beziehungsweise dem Gehäusedeckel 20 zugewandten Radrücken 42 aufweist. Der Radrücken 42 weist dabei zumindest einen zumindest im Wesentlichen ebenen Radrückenbereich 44 auf. Mit anderen Worten ist der Radrückenbereich 44 in einer Ebene angeordnet, welche zumindest im Wesentlichen senkrecht zur Drehachse beziehungsweise axialen Richtung des Abgasturboladers verläuft. Der Radrückenbereich 44 ist dabei in zumindest teilweiser Überdeckung mit einem in Fig. 1 mit 46 bezeichneten Bereich des Gewindeelements 30 beziehungsweise des Gehäusedeckels 20 angeordnet. Dies bedeutet, dass der Bereich 46 in axialer Richtung nach außen hin zumindest teilweise durch den zumindest im Wesentlichen ebenen Radrückenbereich 44 überdeckt ist. Der Bereich 46 des Gewindeelements 30 beziehungsweise des Gehäusedeckels 20 ist dabei von dem zumindest im Wesentlichen ebenen Radrückenbereich 44 weg gewölbt. Mit anderen Worten ist der Bereich 46 bezogen auf den Radrückenbereich 44 konkav ausgebildet. Hierdurch ist ein besonders vorteilhafter, in axialer Richtung verlaufender Abstand zwischen dem Verdichterrad 14, insbesondere dem Radrückenbereich 44, und dem Gewindeelement 30 beziehungsweise dem Gehäusedeckel 20 geschaffen, wodurch unerwünschtes Blow-by und unerwünschte Leckagen, insbesondere Ölleckagen, zumindest gering gehalten oder vermieden werden können, da durch diesen Abstand eine Strömung zwischen dem Verdichterrad 14 und dem Gewindeelement 30 beziehungsweise dem Gehäusedeckel 20 optimiert werden kann. Fig. 2 zeigt den Abgasturbolader gemäß der Figur 1 in einer schematischen Vorderansicht.

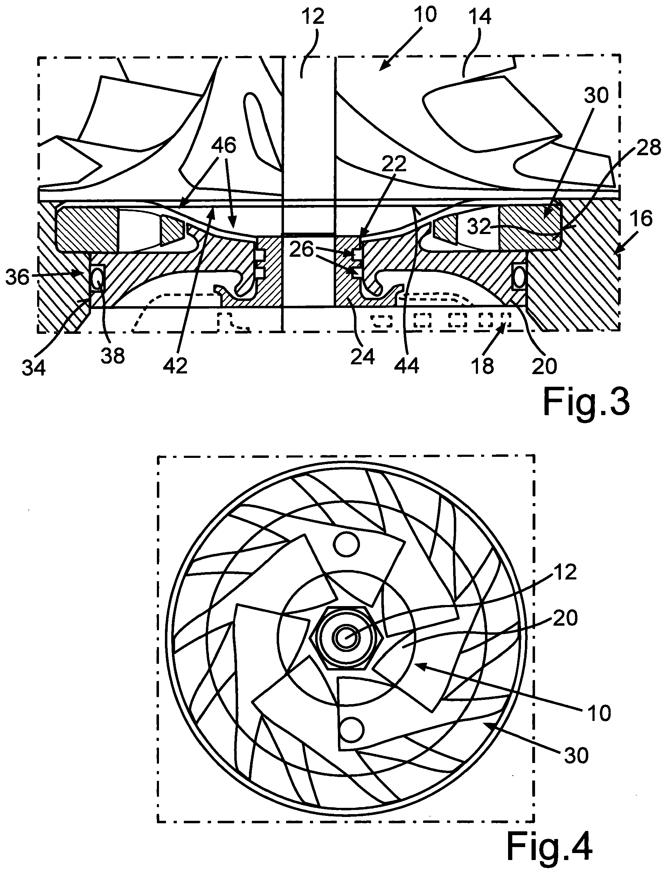

Fig. 3 und 4 zeigen den Abgasturbolader gemäß einer Ausführungsform gemäß der Erfindung, wobei in Fig. 3 der Abgasturbolader ausschnittsweise in einer schematischen Längsschnittansicht und in Fig. 4 in einer schematischen Vorderansicht zu sehen ist.

Die Ausführungsform gemäß der Erfindung unterscheidet sich insbesondere dadurch, dass der Gehäusedeckel 20 nicht einstückig mit dem Gewindeelement 30 ausgebildet ist, sondern das Gewindeelement 30 und der Gehäusedeckel 20 sind als separat voneinander ausgebildete Bauteile, das heißt als an sich separate Einzelbauteile ausgebildet, welche in axialer Richtung zumindest mittelbar und vorliegend direkt aneinander abgestützt sind. Aus Fig. 3 ist erkennbar, dass zumindest ein Teilbereich des Gehäusedeckels 20 in axialer Richtung zwischen dem Gewindeelement 30 und dem Lagergehäuse 16 angeordnet ist, sodass durch das Verschrauben beziehungsweise Einschrauben des Gewindeelements 30 mit dem beziehungsweise in das Lagergehäuse 16 der Gehäusedeckel 20 in axialer Richtung gegen das Lagergehäuse 16 gespannt wird. Der Gehäusedeckel 20 ist nämlich in axialer Richtung einerseits zumindest mittelbar und vorliegend direkt am Lagergehäuse 16 abgestützt, wobei der Gehäusedeckel 20 in axialer Richtung andererseits zumindest mittelbar und vorliegend direkt am Gewindeelement 30 abgestützt ist. Dadurch wird der Gehäusedeckel 20 in axialer Richtung gegen das Lagergehäuse 16 gedrückt, wenn das Gewindeelement 30 mit dem Lagergehäuse 16 verschraubt und festgezogen wird.

Aus Fig. 3 ist ferner erkennbar, dass der Gehäusedeckel 20 zumindest teilweise in dem Gewindeelement 30 aufgenommen ist, sodass zumindest ein Teil des Gehäusedeckels 20 in radialer Richtung nach außen durch das Gewindeelement 30 überdeckt ist. Aus Fig. 3 ist ferner erkennbar, dass sowohl das Gewindeelement 30 als auch der Gehäusedeckel 20 jeweilige Bereiche 46 aufweisen, welche in axialer Richtung nach außen jeweils zumindest teilweise durch den zumindest im Wesentlichen ebenen Radrückenbereich 44 überdeckt sind. Die Bereiche 46 sind dabei bezogen auf den zumindest im Wesentlichen ebenen Radrückenbereich 44 konkav ausgebildet, das heißt von dem zumindest im Wesentlichen ebenen Radrückenbereich 44 weg gewölbt, wodurch der Abstand zwischen dem Radrücken 42 beziehungsweise dessen Geometrie und dem Gewindeelement 30 beziehungsweise dem Gehäusedeckel 20 geschaffen ist.

Bei der Ausführungsform gemäß der Erfindung ist das Gewindeelement 30 somit als Gewindedeckel ausgebildet, welcher mit dem Lagergehäuse 16 über das Außengewinde 28 und das korrespondierende Innengewinde 32 verschraubt ist. Mittels dieses Gewindedeckels ist der Gehäusedeckel 20 am Lagergehäuse 16 gehalten. Die Verwendung eines solchen, separat vom Gehäusedeckel 20 ausgebildeten Gewindedeckels ermöglich nicht nur die Realisierung einer besonders einfachen Montage, sondern auch die Realisierung eines Gleichteileprinzips, sodass der gleiche oder selbe Gewindedeckel für unterschiedliche Größen des Gehäusedeckels 20, das heißt für unterschiedliche Gehäusedeckelgrößen verwendet werden kann, um mittels des gleichen Gewindedeckels die unterschiedlichen beziehungsweise unterschiedlich großen Gehäusedeckel an einem jeweiligen Lagergehäuse eines Abgasturboladers zu befestigen.

### Bezugszeichenliste

- 10: Rotor
- 12: Welle
- 14: Verdichterrad
- 16: Lagergehäuse
- 18: Durchgangsöffnung
- 20: Gehäusedeckel
- 22: Durchgangsöffnung
- 24: Dichtungsbuchse
- 26: Nut
- 28: Außengewinde
- 30: Gewindeelement
- 32: Innengewinde
- 34: außenumfangsseitige Mantelfläche
- 36: Nut
- 38: O-Ring
- 39: Bund
- 40: Bund
- 42: Radrücken
- 44: Radrückenbereich
- 46: Bereich

## Patentansprüche

1. Abgasturbolader für eine Verbrennungskraftmaschine, insbesondere eines Kraftwagens, mit einem wenigstens eine Durchgangsöffnung (18) für einen Rotor (10) des Abgasturboladers aufweisenden Lagergehäuse (16) zum Lagern des Rotors (10), und mit wenigstens einem mit dem Lagergehäuse (16) verbundenen Gehäusedeckel (20), mittels welchem die Durchgangsöffnung (18) in axialer Richtung des Abgasturboladers zumindest teilweise verschlossen ist,
wobei der Gehäusedeckel (20) mit dem Lagergehäuse (16) mittels genau eines ein Außengewinde (28) aufweisenden Gewindeelements (30) verbunden ist, welches über sein Außengewinde (28) und ein korrespondierendes Innengewinde (30) des Lagergehäuses (16) mit diesem verschraubt ist, **dadurch gekennzeichnet, dass** das Gewindeelement (30) und der Gehäusedeckel (20) als separat voneinander ausgebildete Bauteile ausgebildet sind, wobei das Gewindeelement (30) unter Halten des Gehäusedeckels (20) am Lagergehäuse (16) in axialer Richtung zumindest mittelbar am Gehäusedeckel (20) abgestützt ist.

2. Abgasturbolader nach Anspruch 1,
**dadurch gekennzeichnet, dass**
der Gehäusedeckel (20) zumindest teilweise in dem Gewindeelement (30) aufgenommen ist.

3. Abgasturbolader nach einem der Ansprüche 1 oder 2,
**dadurch gekennzeichnet, dass**
das Gewindeelement (30) einen größeren Außendurchmesser als der Gehäusedeckel (20) aufweist.

4. Abgasturbolader nach einem der vorhergehenden Ansprüche,
**dadurch gekennzeichnet, dass**
wenigstens ein an dem Lagergehäuse (16) um eine Drehachse relativ zu dem Lagergehäuse (16) drehbar gelagertes Laufrad (14) des Rotors (10) vorgesehen ist, welches einen dem Lagergehäuse (16) zugewandten Radrücken (42) mit zumindest einem ebenen Radrückenbereich (44) aufweist, welcher in zumindest teilweiser Überdeckung mit einem von dem ebenen Radrückenbereich (44) in axialer Richtung weggewölbten Bereich (46) des Gehäusedeckels (20) und/oder des Gewindeelements (30) angeordnet ist.

5. Abgasturbolader nach einem der vorhergehenden Ansprüche,
**dadurch gekennzeichnet, dass**
der Gehäusedeckel (20) wenigstens eine Aufnahme (36) für ein Dichtungselement (38) zum Abdichten des Gehäusedeckels (20) gegen das Lagergehäuse (16) aufweist.

6. Abgasturbolader nach Anspruch 5,
**dadurch gekennzeichnet, dass**
das Außengewinde (28) des Gewindeelements (30) auf einem größeren Außendurchmesser als die Aufnahme (36) angeordnet ist.

7. Abgasturbolader nach einem der vorhergehenden Ansprüche,
**dadurch gekennzeichnet, dass**
wenigstens ein Axiallager zum axialen Lagern des Rotors (10) vorgesehen ist, wobei das Axiallager mittels des Gewindeelements (30) am Lagergehäuse (16) gehalten ist.

8. Verbrennungskraftmaschine, insbesondere für einen Kraftwagen, mit wenigstens einem Abgasturbolader nach einem der vorhergehenden Ansprüche.

## Claims

1. Turbocharger for an internal combustion engine, in particular of a motor vehicle, with a bearing housing (16) having at least one through-opening (18) for a rotor (10) of the turbocharger for bearing-mounting the rotor (10), and with at least one housing cover (20), which is joined to the bearing housing (16) and by means of which the through-opening (18) is at least partially closed in the axial direction of the turbocharger, wherein the housing cover (20) is joined to the bearing housing (16) by means of precisely one thread element (30) having a male thread (28), which thread element (30) is bolted by way of its male thread (28) and a corresponding female thread (30) of the bearing housing (16) to the latter,
**characterised in that**
the thread element (30) and the housing cover (20) are designed as components separate from each other, the thread element (30) being supported on the housing cover (20) at least indirectly in the axial direction while holding the housing cover (20) at the bearing housing (16).

2. Turbocharger according to claim 1,
**characterised in that**
the housing cover (20) is at least partially accommodated in the thread element (30).

3. Turbocharger according to claim 1 or 2,
**characterised in that**
the thread element (30) has a larger outer diameter than the housing cover (20).

4. Turbocharger according to any of the preceding claims,
**characterised in that**
at least one impeller (14) of the rotor (10) is provided, which impeller (14) is mounted on the bearing housing (16) for rotation about an axis of rotation relative to the bearing housing (16) and has an impeller back (42) facing the bearing housing (16) and having at least one flat impeller back region (44), which is arranged in at least partial overlap with a region (46) of the housing cover (20) and/or of the thread element (30) which is curved away from the flat impeller back region (44) in the axial direction.

5. Turbocharger according to any of the preceding claims,
**characterised in that**
the housing cover (20) has at least one receptacle (36) for a seal element (38) for sealing the housing cover (20) against the bearing housing (16).

6. Turbocharger according to claim 5,
**characterised in that**
the male thread (28) of the thread element (30) is arranged on a larger outer diameter than the receptacle (36).

7. Turbocharger according to any of the preceding claims,
**characterised in that**
at least one thrust bearing is provided for the axial mounting of the rotor (10), the thrust bearing being held at the bearing housing (16) by means of the thread element (30).

8. Internal combustion engine, in particular for a motor vehicle, with at least one turbocharger according to any of the preceding claims.

## Revendications

1. Turbocompresseur pour un moteur à combustion interne, en particulier pour un véhicule à moteur, comprenant un logement de palier (16) présentant au moins un orifice de passage (18) pour un rotor (10) du turbocompresseur servant à loger le rotor (10), et comprenant au moins un couvercle de logement (20) relié au logement de palier (16), ledit couvercle de logement permettant de fermer au moins partiellement l'orifice de passage (18) dans la direction axiale du turbocompresseur,
le couvercle de logement (20) étant relié au logement de palier (16) au moyen d'un élément de filetage (30) présentant précisément un filetage extérieur (28), qui se visse par son filetage extérieur (28) et un filetage intérieur correspondant (30) du logement de palier (16) à celui-ci, **caractérisé en ce que**
l'élément de filetage (30) et le couvercle de logement (20) sont conçus comme des composants séparés l'un de l'autre,
l'élément de filetage (30) s'appuie par retenue du couvercle de logement (20) sur le logement de palier (16) dans la direction axiale au moins directement sur le couvercle de logement (20).

2. Turbocompresseur selon la revendication 1, **caractérisé en ce que** le couvercle de logement (20) est logé au moins en partie dans l'élément de filetage (30).

3. Turbocompresseur selon l'une quelconque revendications 1 ou 2, **caractérisé en ce que** l'élément de filetage (30) présente un diamètre extérieur supérieur à celui du couvercle de logement (20).

4. Turbocompresseur selon l'une quelconque des revendications précédentes, **caractérisé en ce qu'**au moins une roue à aubes (14) du rotor (10) est montée en rotation par rapport au logement de palier (16) autour d'un axe de rotation, ladite roue présentant un dos de roue (42) orienté vers le logement de palier (16) avec au moins une zone de dos de roue plate (44), qui est disposée dans le recouvrement au moins partielle avec une zone incurvée (46) du couvercle de logement (20) et/ou de l'élément de filetage (30) s'éloignant de la zone de dos de roue (44) plate dans la direction axiale.

5. Turbocompresseur selon l'une quelconque des revendications précédentes, **caractérisé en ce que** le couvercle de logement (20) présentant au moins un logement (36) pour un élément d'étanchéité (38) pour rendre étanche le couvercle de logement (20) contre le logement de palier (16)

6. Turbocompresseur selon la revendication 5, **caractérisé en ce que** le filetage extérieur (28) de l'élément de filetage (30) est disposé sur un diamètre extérieur supérieur à celui du logement (36).

7. Turbocompresseur selon l'une quelconque des revendications précédentes, **caractérisé en ce qu'**au moins un palier axial pour loger axialement le rotor (10) est prévu, le palier axial étant maintenu au moyen de l'élément de filetage (30) sur le logement de palier (16).

8. Moteur à combustion interne, en particulier pour un véhicule à moteur, comprenant au moins un turbocompresseur selon l'une des revendications précédentes.
